# EUROPEAN PATENT SPECIFICATION

(11) **EP 1 671 403 B1**
(45) Date of publication and mention of the grant of the patent: **31.12.2008**
(21) Application number: 03769499.9
(22) Date of filing: 29.09.2003
(51) Int. Cl.: H01S 3/139, H01S 5/14, H01S 5/0687

(54) **ANGULAR LASER CONTROL**
WINKELGESTEUERTER LASER
UNITE DE CONTROLE DE LASER ANGULAIRE

(43) Date of publication of application: 21.06.2006
(73) Proprietor: Agilent Technologies, Inc., Santa Clara, CA 95051 (US)
(72) Inventor: NEBENDAHL, Bernd, 71254 Ditzingen (DE); KALLMANN, Ulrich, 72076 Tübingen (DE)
(74) Representative: Barth, Daniel Mathias
(86) International application number: PCT/EP2003/050665
(87) International publication number: WO 2005/031929

(56) References cited:
- EP-A- 0 951 112
- US-A- 5 054 028
- US-B2- 6 608 847
- MATTORI S ET AL: "A MODE HOPPING SUPPRESSED EXTERNAL-CAVITY SEMICONDUCTOR LASER USING FEEDBACK CONTROL" IEICE TRANSACTIONS ON ELECTRONICS, INSTITUTE OF ELECTRONICS INFORMATION AND COMM. ENG. TOKYO, JP, vol. E85-C, no. 1, January 2002 (2002-01), pages 98-103, XP001116769 ISSN: 0916-8524

## Description

### BACKGROUND OF THE INVENTION

In the optical communication industry there is a need for testing e.g. optical components and amplifiers with lasers at different wavelengths. For this purpose, various types of external cavity type lasers are known.

The features of the preamble to claim 1 are known from EP-A-951112.

### SUMMARY OF THE INVENTION

It is an object of the invention to improve control of external cavity type lasers. The object is solved by the independent claims. Preferred embodiments are shown by the dependent claims.

An external-cavity type laser unit in the context of the present invention comprises a laser gain medium arranged in an external cavity having a reflecting dispersion device. The laser gain medium provides a first beam towards the reflecting dispersion device and a second beam in another direction than the first beam. The reflecting dispersion device receives the first beam and reflects a beam towards the laser gain medium, wherein the reflecting angle is dependent on the wavelength.

Such external-cavity type laser unit can be embodied, for example, following the so-called Littman geometry (as disclosed e.g. in "Liu and Littman, Novel geometry for single-mode scanning of tunable lasers, Optical Society of America, 1981 "), the so-called Littrow geometry (as disclosed e.g. in EP 0 952 643 A2), or the Bragg-reflector type cavity (are shown e.g. in "A. Nahata et al., Widely Tunable Semiconductor Laser Using Dynamic Holographically-Defined Distributed Bragg Reflector, 2000 IEEE"). The teaching of those documents shall be incorporated herein by reference.

It is known, e.g. from aforementioned EP-A-951112, that monitoring the reflecting angle allows deriving information about the difference between oscillation and selected wavelength. While this monitoring relates to the beam reflected from the wavelength. While this monitoring relates to the beam reflected from the reflecting dispersion device in response to the first beam, an angular displacement of the second beam has never been considered. However, according to the present invention, such angular displacement of the second beam is utilized for controlling the laser unit.

In particular in case the second beam, e.g. as output beam of the laser unit, is for example to be coupled into an optical fiber or is directed e.g. to a measuring unit (e.g. a power meter or a wavemeter as disclosed e.g. in EP-A-0875743 by the same applicant), it has been found that angular variations of the second beam can have significant impact on the performance such as coupling ratio or measuring accuracy.

Therefore, according to the present invention, a control unit is provided for controlling the laser unit and comprises an angle unit for providing an angular variation signal indicative of an angular variation of the second beam. Further, the control unit comprises an analysis unit for receiving the angular variation signal and controlling the reflection angle of the reflecting dispersion device dependent on the angular variation signal.

In a preferred embodiment, the angle unit comprises an angle detection unit adapted for detecting the angular variation of the second beam and deriving the angular variation signal in correspondence with the detected angular variation. Such angle detection unit allows to directly determining the angular variation.

Preferably, the angle detection unit comprises a position dependent detector adapted for receiving the second beam, or a part thereof, and detecting the angular variation from a lateral variation of the received beam detected along the position dependent detector. By increasing the distance between the laser gain medium and the position dependent detector, the sensitivity and measurement range can be adjusted. Alternatively or in addition, the angle detection unit might comprises two power detectors each receiving a portion of the second beam, wherein the ratio of the two portions depends on the angular variation of the second beam. This simple configuration allows to measure, at the same time, the power that can be used for monitoring the power or even regulating it. Instead of using the angle detection unit, the angle unit might derive the angular variation signal e.g. from the coupling efficiency of the beam to a receiver with a small numerical aperture, for example a single mode fiber. If the position of the receiver is shifted with respect to the nominal position, an ambiguity whether the beam rotates in one or the other direction can be resolved. A beam splitter might be used in one embodiment for receiving and splitting the second beam into one portion to be provided to the angle unit and into another portion to be provided to a coupling unit for coupling out the received portion of the second beam, preferably into an optical fiber or any other type of optical signal carrier. This allows to utilize the other portion e.g. as output beam of the laser unit.

A power detector can be used for determining a power value indicative of the total power of the second beam. This power detector can be used to monitor or regulate the total power from the laser unit. Preferably, the angle unit is adapted to determine the angular variation signal based on power value indicative of power received by the optical fiber and the determined power value indicative of the total power of the second beam. The power received by the fiber can be used for monitoring or regulating the optical power available at the fiber. The analysis unit can be used for controlling the reflection angle to keep the angular variation substantially constant, preferably with respect to a reference angle, and preferably to be substantially zero or another predetermined value. This allows maximizing or at least controlling the ratio of the power received by the fiber compared to the power of the second beam. For controlling the reflection angle, the analysis unit preferably controls at least one of a rotation, a shift, and a lateral shift of the reflecting dispersion device. In a preferred embodiment, the control unit comprises a modulator for modulating the reflection angle of the reflecting dispersion device with a modulation signal, preferably by modulating around a center value. The analysis unit derives an error signal by analyzing the modulated angular variation signal in conjunction with the modulation signal, and controls the reflection angle of the reflecting dispersion device dependent on the derived error signal. Any ambiguities (not already resolved by the detector) can then be determined, especially the sign of the error can be measured. The laser gain medium preferably comprises an amplifying waveguide or an amplifying medium in general like a doped crystal or glass, a gas cell or a dye cell. The reflecting dispersion device may comprise one or more gratings or dispersion prisms, one or more gratings or dispersion prisms with one or more mirrors or other reflecting devices like dihedral elements or retroreflecting cubes or any other device, where the reflection angle substantially depends on the wavelength of the incident light, either with a fixed or with a tunable characteristic. The invention can be partly or entirely embodied or supported by one or more suitable software programs, which can be stored on or otherwise provided by any kind of data carrier, and which might be executed in or by any suitable data processing unit. Software programs or routines are preferably applied to calibrate the target value for the angle to be detected by the angle detection unit or to calibrate the ratio of powers in the fiber and the total power of the second beam and in general to build the regulation.

### BRIEF DESCRIPTION OF THE DRAWINGS

Other objects and many of the attendant advantages of the present invention will be readily appreciated and become better understood by reference to the following detailed description when considering in connection with the accompanied drawing(s). Features that are substantially or functionally equal or similar will be referred to with the same reference sign(s).

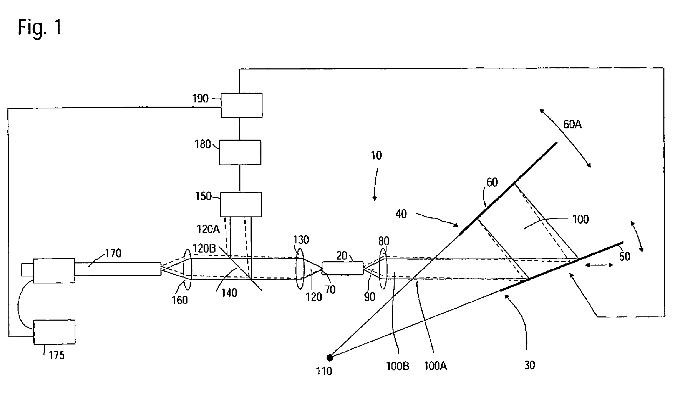

Fig. 1 shows an example of an embodiment of a laser unit 10 according to the present invention.

### MORE DETAILED DESCRIPTION OF PREFERRED EMBODIMENTS ACCORDING TO THE INVENTION

In Fig. 1, the laser unit 10 comprises a laser gain medium 20 and an external cavity 30 having a reflecting dispersion device 40. In the example of Fig. 1, the reflecting dispersion device 40 comprises a grating 50 and a retro-reflecting mirror 60, which can be a plain mirror, dihedral element, etc. Accordingly, the external cavity 30 in Fig. 1 extends between the mirror 60 and an end facet 70 of the laser gain medium 20 facing towards the collimating optics 130.

A lens or any other collimating optics 80 can be provided to collimate a first beam 90 emitted from the laser gain medium 20 towards grating 50 of the reflecting dispersion device 40. The grating 50 receives and diffracts the first beam 90 dependent on the wavelength of the first beam 90. A portion 100 of the diffracted first beam 90 is reflected back by the mirror 60 and will be diffracted by the grating 50 as a beam 100A towards the laser gain medium 20.

The elements 20 to 100 thus represent a so-called Litman-architecture. Continuous and mode-hop free tuning can be achieved (at least in theory) when rotating the mirror 60 (as indicated by the angle 60A) around a pivot point 110.

Thus, the reflecting dispersion device 40 receives the first beam 90 and reflects back the beam 100A towards the laser gain medium 20 having a reflection angle dependent on the wavelength. In normal operation, the reflection angle leads to a beam 100A parallel to the beam 90 but in case of a mismatch the beam is reflected into a different direction shown as dotted beam 100B.The laser gain medium 20 provides a second beam 120 in opposite direction than the first beam 90. In the embodiment of Fig. 1, the second beam 120 represents the output beam of the laser unit 10 and is collimated by a collimator 130 towards a beam splitter 140. The beam splitter 140 splits up the second beam 120 into a portion 120A directed towards an angle detection unit 150 and into a portion 120B directed towards and being focused by a lens 160 into a fiber 170. A detector 175 might be coupled to the fiber 170 for detecting optical power received at the fiber 170.

The angle detection unit 150 detects an angular variation (dotted lines in Fig. 1) of the second beam 120, and an angle unit 180 derives an angular variation signal indicative of an angular variation of the second beam in correspondence with the detected angular variation. An analysis unit 190 receives the angular variation signal and might receive the power detected by the detector 175 and controls the reflection angle of the reflecting dispersion device 40 dependent on the angular variation signal. This can be accomplished by rotation and/or shifting the grating 50 or the mirror 60 as indicated by the arrows. By rotating or shifting the grating or the mirror, the reflected beam 100B can be rotated so that the direction is antiparallel to the beam 90.The angle detection unit 150 can be embodied e.g. as a position dependent detector detecting a lateral variation of the received beam 120 detected along the position dependent detector.

## Claims

1. A control unit (150, 180, 190) adapted for controlling a laser unit (10), wherein:
• the laser unit (10) comprises a laser gain medium (20) and an external cavity (30) having a reflecting dispersion device (40),
• the laser gain medium (20) is adapted for providing a first beam (90) towards the reflecting dispersion device (40),
• the reflecting dispersion device (40) is adapted for receiving the first beam (90) and reflecting a beam (100A), having a reflection angle dependent on the wavelength, towards the laser gain medium (20), and
• the laser gain medium (20) is adapted for providing a second beam (120) in another direction than the first beam (90);
the control unit (190) comprising:
an angle unit (150, 180) adapted for providing an angular variation signal indicative of an angular variation, and
an analysis unit (190) adapted for receiving the angular variation signal and controlling the reflection angle of the reflecting dispersion device (40) dependent on the angular variation signal,
**characterized in that**
the angular variation signal is indicative of an angular variation of the second beam (120)

2. The control unit of claim 1 or any one of the above claims, wherein the angle unit comprises an angle detection unit (150) adapted for detecting the angular variation of the second beam and deriving the angular variation signal in correspondence with the detected angular variation.

3. The control unit of claim 2 or any one of the above claims, wherein the angle detection unit comprises a position dependent detector adapted for receiving the second beam, or a part thereof, and detecting the angular variation from a lateral variation of the received beam detected along the position dependent detector.

4. The control unit of claim 2 or any one of the above claims, wherein the angle detection unit comprises two power detectors each receiving a portion of the second beam, wherein the ratio of the two portions depends on the angular variation of the second beam.

5. The control unit of claim 1 or any one of the above claims, further comprising:
a beam splitter (140) adapted for receiving and splitting the second beam into one portion (120A) to be provided to the angle unit and into another portion (120B) to be provided to a coupling unit (160) adapted for coupling out the received portion of the second beam, preferably into at least one of an optical fiber (170) and optical signal carrier.

6. The control unit of claim 1 or any one of the above claims, further comprising a power detector (175) adapted for determining a power value indicative of the total power of the second beam.

7. The control unit of claim 6, wherein the angle unit is adapted to determine the angular variation signal based on power value indicative of the power and the determined power value indicative of the total power of the second beam.

8. The control unit of claim 1 or any one of the above claims, wherein the analysis unit is adapted for controlling the reflection angle of the reflecting dispersion device in order to provide at least one of the following:
• keep the angular variation substantially constant,
• keep the angular variation substantially constant with respect to a reference angle, and preferably substantially zero.
• keep the angular variation substantially zero with respect to a reference angle.

9. The control unit of claim 1 or any one of the above claims, wherein the analysis unit is adapted for controlling at least one of a rotation, a shift, and a lateral shift of the reflecting dispersion device.

10. The control unit of claim 1 or any one of the above claims, further comprising:
a modulator adapted for modulating the reflection angle of the reflecting dispersion device with a modulation signal, preferably modulating around a center value,
wherein the analysis unit is adapted for deriving an error signal by analyzing the modulated angular variation signal in conjunction with the modulation signal, and for controlling the reflection angle of the reflecting dispersion device dependent on the derived error signal.

11. The control unit of claim 1 or any one of the above claims, further comprising:
a second angular detector adapted for detecting a second angular error perpendicular to the first, and
an analysis unit adapted for receiving the second angular variation signal and controlling the second reflection angle perpendicular to the first reflection angle.

12. A laser unit (10) comprising a laser gain medium (20) and an external cavity (30) having a reflecting dispersion device(40), wherein:
• the laser gain medium (20) is adapted for providing a first beam (90) towards the reflecting dispersion device (40),
• the reflecting dispersion device (40) is adapted for receiving the first beam (90) and reflecting a beam (100A), having a reflection angle dependent on the wavelength, towards the laser gain medium (20), and
• the laser gain medium (20) is adapted for providing a second beam (120) in another direction than the first beam;
the laser unit (10) further comprises a control unit (150, 180, 190) of claim 1 or any one of the above claims adapted for controlling the laser unit (10).

13. The laser unit of claim 13 or any one of the above claims, comprising one or more of the following features:
• the second beam represents an output beam of the laser unit,
• the laser gain medium comprises at least one of: an amplifying waveguide, a doped crystal or glass, a gas cell, a dye cell,
• the reflecting dispersion device comprises at least one of: a grating, a dispersion prism, a reflecting device such as a mirror or a dihedral prism.

14. A method for controlling a laser unit (10), wherein:
• the laser unit (10) comprises a laser gain medium (20) and an external cavity (30) having a reflecting dispersion device (40),
• the laser gain medium (20) is adapted for providing a first beam (90) towards the reflecting dispersion device (40),
• the reflecting dispersion device (40) is adapted for receiving the first beam (90) and reflecting a beam (100A), having a reflection angle dependent on the wavelength, towards the laser gain medium (20), and
• the laser gain medium (20) is adapted for providing a second beam (120) in another direction than the first beam (90);
the method comprising the steps of:
(a) providing (150, 180) an angular variation signal indicative of an angular variation of the second beam (120), and
(b) controlling (190) the reflection angle of the reflecting dispersion device (40) dependent on the angular variation signal.

15. A software program or product, preferably stored on a data carrier, for executing the method of claim 14 when run on a data processing system such as a computer.

## Patentansprüche

1. Steuereinheit (150, 180, 190) zum Steuern einer Lasereinheit (10), wobei:
• die Lasereinheit (10) ein Laserverstärkungsmedium (20) und einen externen Resonator (30) mit einer reflektierenden Dispersionseinrichtung (40) aufweist,
• das Laserverstärkungsmedium (20) dazu dient, einen ersten Strahl (90) auf die reflektierende Dispersionseinrichtung (40) zu richten,
• die reflektierende Dispersionseinrichtung (40) dazu dient, den ersten Strahl (90) zu empfangen und einen Strahl (100A) mit einem von der Wellenlänge abhängigen Reflexionswinkel auf das Laserverstärkungsmedium (20) zu richten, und
• das Laserverstärkungsmedium (20) dazu dient, einen zweiten Strahl (120) in eine andere Richtung als der erste Strahl (90) zu richten;
wobei die Steuereinheit (190) aufweist:
eine Winkeleinheit (150, 180) zum Bereitstellen eines Winkeländerungssignals, das für eine Winkeländerung kennzeichnend ist, und
eine Analyseeinheit (190) zum Empfangen des Winkeländerungssignals und zum Steuern des Reflexionswinkels der reflektierenden Dispersionseinrichtung (40) in Abhängigkeit vom Winkeländerungssignal,
**dadurch gekennzeichnet, dass**
das Winkeländerungssignal für eine Winkeländerung des zweiten Strahls (120) kennzeichnend ist.

2. Steuereinheit nach Anspruch 1 oder irgendeinem der vorhergehenden Ansprüche, wobei die Winkeleinheit eine Winkeldetektionseinheit (150) aufweist, die zum Detektieren der Winkeländerung des zweiten Strahls und zum Ableiten des Winkeländerungssignals in Übereinstimmung mit der detektierten Winkeländerung dient.

3. Steuereinheit nach Anspruch 2 oder irgendeinem der vorhergehenden Ansprüche, wobei die Winkeldetektionseinheit einen positionsabhängigen Detektor aufweist, der zum Empfangen des zweiten Strahls oder eines Teils des zweiten Strahls und zum Detektieren der Winkeländerung aus der seitlichen Änderung des empfangenen Strahls dient, die entlang des positionsabhängigen Detektors detektiert wurde.

4. Steuereinheit nach Anspruch 2 oder irgendeinem der vorhergehenden Ansprüche, wobei die Winkeldetektionseinheit zwei Leistungsdetektoren aufweist, die jeweils einen Teil des zweiten Strahls empfangen, wobei das Verhältnis der beiden Teile von der Winkeländerung des zweiten Strahls abhängt.

5. Steuereinheit nach Anspruch 1 oder irgendeinem der vorhergehenden Ansprüche, die ferner aufweist:
einen Strahlteiler (140), der zum Empfangen und Teilen des zweiten Strahls in einen auf die Winkeleinheit zu richtenden Teil (120A) und in einen anderen auf eine Kopplungseinheit (160) zu richtenden Teil (120B) dient, wobei die Kopplungseinheit zum Auskoppeln des empfangenen Teils des zweiten Strahls vorzugsweise in zumindest einen Lichtwellenleiter (170) oder einen optischen Signalträger dient.

6. Steuereinheit nach Anspruch 1 oder irgendeinem der vorhergehenden Ansprüche, die ferner einen Leistungsdetektor (175) aufweist, der zur Ermittlung eines Leistungswertes dient, der für die Gesamtleistung des zweiten Strahls kennzeichnend ist.

7. Steuereinheit nach Anspruch 6, wobei die Winkeleinheit zum Ermitteln des Winkeländerungssignals auf der Grundlage des für die Leistung kennzeichnenden Leistungswertes dient und der ermittelte Leistungswert für die Gesamtleistung des zweiten Strahls kennzeichnend ist.

8. Steuereinheit nach Anspruch 1 oder irgendeinem der vorhergehenden Ansprüche, wobei die Analyseeinheit zur Steuerung des Reflexionswinkels der reflektierenden Dispersionseinrichtung dient, um mindestens eine der folgenden Wirkungen zu erzielen:
• die Winkeländerung im Wesentlichen konstant zu halten,
• die Winkeländerung in Bezug auf einen Referenzwinkel im Wesentlichen konstant und vorzugsweise im Wesentlichen gleich null zu halten,
• die Winkeländerung in Bezug auf einen Referenzwinkel im Wesentlichen gleich null zu halten.

9. Steuereinheit nach Anspruch 1 oder irgendeinem der vorhergehenden Ansprüche, wobei die Analyseeinheit zur Steuerung mindestens einer Rotation, einer Verschiebung oder einer seitlichen Verschiebung der reflektierenden Dispersionseinrichtung dient.

10. Steuereinheit nach Anspruch 1 oder irgendeinem der vorhergehenden Ansprüche, die ferner aufweist:
einen Modulator, der zum Modulieren des Reflexionswinkels der reflektierenden Dispersionseinrichtung mit einem Modulationssignal, vorzugsweise zum Modulieren um einen Mittelwert herum, dient,
wobei die Analyseeinheit zum Ableiten eines Fehlersignals durch Analysieren des modulierten Fehleränderungssignals in Verbindung mit dem Modulationssignal und zum Steuern des Reflexionswinkels der reflektierenden Dispersionseinheit in Abhängigkeit vom abgeleiteten Fehlersignal dient.

11. Steuereinheit nach Anspruch 1 und irgendeinem der vorhergehenden Ansprüche, die ferner aufweist:
einen zweiten Winkeldetektor, der zum Detektieren des Fehlers eines zweiten Winkels dient, der senkrecht zum ersten Winkel steht, und
eine Analyseeinheit, die zum Empfangen des zweiten Winkeländerungssignals und zum Steuern des zweiten Reflexionswinkels dient, der senkrecht zum ersten Reflexionswinkel steht.

12. Lasereinheit (10), die ein Laserverstärkungsmedium (20) und einen externen Resonator (30) mit einer reflektierenden Dispersionseinrichtung (40) aufweist, wobei:
• das Laserverstärkungsmedium (20) dazu dient, einen ersten Strahl (90) auf die reflektierende Dispersionseinrichtung (40) zu richten,
• die reflektierende Dispersionseinrichtung (40) dazu dient, den ersten Strahl (90) zu empfangen und einen Strahl (100A) mit einem von der Wellenlänge abhängigen Reflexionswinkel auf das Laserverstärkungsmedium (20) zu richten, und
• das Laserverstärkungsmedium (20) dazu dient, einen zweiten Strahl (120) in eine andere Richtung als der erste Strahl (90) zu richten;
die Lasereinheit (10) ferner eine Steuereinheit (150, 180, 190) nach Anspruch 1 oder irgendeinem der vorhergehenden Ansprüche zum Steuern der Lasereinheit (10) aufweist.

13. Lasereinheit nach Anspruch 13 oder irgendeinem der vorhergehenden Ansprüche, die eines oder mehrere der folgenden Merkmale aufweist:
• der zweite Strahl stellt einen Austrittsstrahl der Lasereinheit dar,
• das Laserverstärkungsmedium weist mindestens eines der Elemente auf: einen Verstärkungswellenleiter, einen dotierten Kristall oder ein dotiertes Glas, eine Gaszelle oder eine Farbstoffzelle,
• die reflektierende Dispersionseinheit weist mindestens eines der Elemente auf: ein Gitter, ein Dispersionsprisma, eine Reflexionseinrichtung wie zum Beispiel einen Spiegel oder ein Diederprisma.

14. Verfahren zur Steuerung einer Lasereinheit (10), wobei:
• die Lasereinheit (10) ein Laserverstärkungsmedium (20) und einen externen Resonator (30) mit einer reflektierenden Dispersionseinrichtung (40) aufweist,
• das Laserverstärkungsmedium (20) dazu dient, einen ersten Strahl (90) auf die reflektierende Dispersionseinrichtung (40) zu richten,
• die reflektierende Dispersionseinrichtung (40) dazu dient, den ersten Strahl (90) zu empfangen und einen Strahl (100A) mit einem von der Wellenlänge abhängigen Reflexionswinkel auf das Laserverstärkungsmedium (20) zu reflektieren, und
• das Laserverstärkungsmedium (20) dazu dient, einen zweiten Strahl (120) in eine andere Richtung als die des ersten Strahls (90) zu richten;
das Verfahren die Schritte aufweist:
(a) Bereitstellen (150, 180) eines Winkeländerungssignals, das für eine Winkeländerung des zweiten Strahls (120) kennzeichnend ist, und
(b) Steuern (190) des Reflexionswinkels der reflektierenden Dispersionseinrichtung (40) in Abhängigkeit vom Winkeländerungssignal.

15. Softwareprogramm oder -produkt, das vorzugsweise auf einem Datenträger gespeichert ist, zum Ausführen des Verfahrens nach Anspruch 14, wenn es auf einem Datenverarbeitungssystem wie beispielsweise einem Computer ausgeführt wird.

## Revendications

1. Unité de commande (150, 180, 190) à même de commander une unité laser (10), dans laquelle :
• l'unité laser (10) comprend un milieu de gain du laser (20) et une cavité externe (30) comportant un dispositif de dispersion par réflexion (40) ;
• le milieu de gain du laser (20) est à même de fournir un premier faisceau (90) vers le dispositif de dispersion par réflexion (40) ;
• le dispositif de dispersion par réflexion (40) est à même de recevoir le premier faisceau (90) et de réfléchir un faisceau (100A), présentant un angle de réflexion dépendant de la longueur d'onde, vers le milieu de gain du laser (20), et
• le milieu de gain du laser (20) est à même de fournir un deuxième faisceau (120) dans une autre direction que le premier faisceau (90) ;
l'unité de commande (190) comprenant :
une unité d'angle (150, 180) à même de fournir un signal de variation angulaire indicatif d'une variation angulaire, et
une unité d'analyse (190) à même de recevoir le signal de variation angulaire et de commander l'angle de réflexion du dispositif de dispersion par réflexion (40) en fonction du signal de variation angulaire ;
**caractérisée en ce que**
le signal de variation angulaire est indicatif d'une variation angulaire du deuxième faisceau (120).

2. Unité de commande suivant la revendication 1 ou suivant l'une quelconque des revendications précédentes, dans laquelle l'unité d'angle comprend une unité de détection d'angle (150) à même de détecter la variation angulaire du deuxième faisceau et de dériver le signal de variation angulaire en fonction de la variation angulaire détectée.

3. Unité de commande suivant la revendication 2 ou suivant l'une quelconque des revendications précédentes, dans laquelle l'unité de détection d'angle comprend un détecteur dépendant de la position à même de recevoir le deuxième faisceau, ou une partie de celui-ci, et de détecter la variation angulaire à partir d'une variation latérale du faisceau reçu détectée le long du détecteur dépendant de la position.

4. Unité de commande suivant la revendication 2 ou suivant l'une quelconque des revendications précédentes, dans laquelle l'unité de détection d'angle comprend deux détecteurs de puissance recevant chacun une partie du deuxième faisceau, dans laquelle le rapport de deux parties dépend de la variation angulaire du deuxième faisceau.

5. Unité de commande suivant la revendication 1 ou suivant l'une quelconque des revendications précédentes, comprenant en outre :
un séparateur de faisceau (140) à même de recevoir et de séparer le deuxième faisceau en une partie (120A) qui sera fournie à l'unité d'angle et en une autre partie (120B) qui sera fournie à une unité de couplage (160) à même de découpler la partie reçue du deuxième faisceau, de préférence dans au moins une fibre optique (170) et un milieu de signal optique.

6. Unité de commande suivant la revendication 1 ou suivant l'une quelconque des revendications précédentes, comprenant en outre un détecteur de puissance (175) à même de déterminer une valeur de puissance indicative de la puissance totale du deuxième faisceau.

7. Unité de commande suivant la revendication 6, dans laquelle l'unité d'angle est à même de déterminer le signal de variation angulaire sur la base de la valeur de puissance indicative de la puissance et de la valeur de puissance déterminée indicative de la puissance totale du deuxième faisceau.

8. Unité de commande suivant la revendication 1 ou suivant l'une quelconque des revendications précédentes, dans laquelle l'unité d'analyse est à même de commander l'angle de réflexion du dispositif de dispersion par réflexion afin de permettre au moins une des opérations suivantes :
• maintenir la variation angulaire pratiquement constante ;
• maintenir la variation angulaire pratiquement constante par rapport à un angle de référence et de préférence pratiquement nulle ;
• maintenir la variation angulaire pratiquement nulle par rapport à un angle de référence.

9. Unité de commande suivant la revendication 1 ou suivant l'une quelconque des revendications précédentes, dans laquelle l'unité d'analyse est à même de commander au moins une rotation, un décalage et/ou un décalage latéral du dispositif de dispersion par réflexion.

10. Unité de commande suivant la revendication 1 ou suivant l'une quelconque des revendications précédentes, comprenant en outre :
un modulateur à même de moduler l'angle de réflexion du dispositif de dispersion par réflexion à l'aide d'un signal de modulation, de préférence une modulation autour d'une valeur centrale ;
dans laquelle l'unité d'analyse est à même de dériver un signal d'erreur en analysant le signal de variation angulaire modulé conjointement au signal de modulation, et de commander l'angle de réflexion du dispositif de dispersion par réflexion en fonction du signal d'erreur dérivé.

11. Unité de commande suivant la revendication 1 ou suivant l'une quelconque des revendications précédentes, comprenant en outre :
un deuxième détecteur angulaire à même de détecter une deuxième erreur angulaire perpendiculaire à la première, et
une unité d'analyse à même de recevoir le deuxième signal de variation angulaire et de commander le deuxième angle de réflexion perpendiculaire au premier angle de réflexion.

12. Unité laser (10) comprenant un milieu de gain du laser (20) et une cavité externe (30) comportant un dispositif de dispersion par réflexion (40), dans laquelle :
• le milieu de gain du laser (20) est à même de fournir un premier faisceau (90) vers le dispositif de dispersion par réflexion (40) ;
• le dispositif de dispersion par réflexion (40) est à même de recevoir le premier faisceau (90) et de réfléchir un faisceau (100A), présentant un angle de réflexion dépendant de la longueur d'onde, vers le milieu de gain du laser (20), et
• le milieu de gain du laser (20) est à même de fournir un deuxième faisceau (120) dans une autre direction que le premier faisceau ;
l'unité laser (10) comprend en outre une unité de commande (150, 180, 190) suivant la revendication 1 ou suivant l'une quelconque des revendications précédentes à même de commander l'unité laser (10).

13. Unité laser suivant la revendication 13 ou suivant l'une quelconque des revendications précédentes, comprenant une ou plusieurs des particularités suivantes :
• le deuxième faisceau représente un faisceau de sortie de l'unité laser ;
• le milieu de gain du laser comprend au moins un des éléments suivants : un guide d'ondes d'amplification, un cristal ou un verre dopé, une pile à gaz, une cellule à colorant ;
• le dispositif de dispersion par réflexion comprend au moins un des éléments suivants : un réseau de diffraction, un prisme de dispersion, un dispositif de réflexion comme un miroir ou un prisme dièdre.

14. Procédé de commande d'une unité laser (10), dans lequel :
• l'unité laser (10) comprend un milieu de gain du laser (20) et une cavité externe (30) comportant un dispositif de dispersion par réflexion (40) ;
• le milieu de gain du laser (20) est à même de fournir un premier faisceau (90) vers le dispositif de dispersion par réflexion (40) ;
• le dispositif de dispersion par réflexion (40) est à même de recevoir le premier faisceau (90) et de réfléchir un faisceau (100A), présentant un angle de réflexion dépendant de la longueur d'onde, vers le milieu de gain du laser (20), et
• le milieu de gain du laser (20) est à même de fournir un deuxième faisceau (120) dans une autre direction que le premier faisceau (90) ;
le procédé comprenant les étapes suivantes :
(a) la fourniture (150, 180) d'un signal de variation angulaire indicatif d'une variation angulaire du deuxième faisceau (120), et
(b) la commande (190) de l'angle de réflexion du dispositif de dispersion par réflexion (40) en fonction du signal de variation angulaire.

15. Programme ou produit logiciel, de préférence stocké sur un milieu de données, pour exécuter le procédé suivant la revendication 14 lorsqu'il est exécuté sur un système de traitement de données comme un ordinateur.
